# EUROPÄISCHE PATENTSCHRIFT

(11) **EP 2 764 805 B1**
(45) Veröffentlichungstag und Bekanntmachung des Hinweises auf die Patenterteilung: **15.04.2015**
(21) Anmeldenummer: 14153456.0
(22) Anmeldetag: 31.01.2014
(51) Int. Cl.: A47J 31/44

(54) **Optimiertes Brüheinheitengehäuse**
Optimised brewing unit housing
Boîtier d'unité d'ébouillantage optimisé

(30) Priorität: 08.02.2013 DE 102013202149
(43) Veröffentlichungstag der Anmeldung: 13.08.2014
(73) Patentinhaber: BSH Hausgeräte GmbH, 81739 München (DE)
(72) Erfinder: Grieb, Jöran, 83253 Rimsting (DE); Haslacher, Christian, 5303 Thalgau (AT); Huber, Michael, 6341 Ebbs (AT); Quandt, Christian, 83301 Traunreut (DE); Strobl, Robert, 83246 Unterwössen (DE)

(56) Entgegenhaltungen:
- WO-A1-2009/056426
- WO-A1-2012/084672
- WO-A2-2012/158798
- DE-U1- 8 704 206

## Beschreibung

Die vorliegende Erfindung betrifft einen Kaffeevollautomaten, umfassend eine Spindelbrüheinheit mit einer Brühvorrichtung aus einer Brühkammer und einem Brühkolben, eine Gewindespindel zum Antrieb der Brühkammer über einen Verbindungsarm als Spindelmutter, womit die Brühvorrichtung seitlich neben der Gewindespindel angeordnet ist, weiterhin umfassend ein C-förmiges Gehäuse der Spindelbrüheinheit, in dem die Brühvorrichtung gelagert ist, mit einem Ständerabschnitt parallel zur Gewindespindel, einem Bodenabschnitt sowie einem Deckenabschnitt, die sich im Wesentlichen orthogonal zur Gewindespindel erstrecken, wobei das Gehäuse in ein erstes Segment und ein zweites Segment trennbar ist.

Einen derartigen Kaffeevollautomaten offenbart die WO 2009 056 426 A1. Das Gehäuse bzw. der Rahmen der Spindelbrüheinheit muss einerseits zur Montage einer Gewindespindel trennbar bzw. zerlegbar ausgebildet sein und andererseits hohe Zug- und Druckbelastungen aushalten, die bei einem Brühvorgang in der Spindelbrüheinheit wirken. Um diese Anforderungen an die Kraft- und Momentenbelastbarkeit zu erfüllen, können herkömmliche Gehäuse aber unter Umständen komplex gestaltet und aufwändig herzustellen sein.

Der Erfindung liegt daher die Aufgabe zugrunde, einen Kaffeevollautomaten hinsichtlich der Komplexität seiner Brüheinheit zu vereinfachen.

Die Aufgabe wird durch einen Kaffeevollautomaten mit den in Anspruch 1 angegebenen Merkmalen gelöst. Der eingangs genannte Kaffeevollautomat wird dazu erfindungsgemäß derart weitergebildet, dass eine Trennebene, die das Gehäuse teilt, im Wesentlichen quer zur Spindelachse verläuft und das Gehäuse in ein unteres Segment und ein oberes Segment trennt. Die Erfindung wendet sich also davon ab, dass die Trennebene des Gehäuses entlang der Gewindespindel und damit weitgehend vertikal verläuft. Sie verfolgt vielmehr das Prinzip, die Trennebene weitgehend horizontal anzuordnen, so dass die Drehachse der Gewindespindel einerseits und ihre Einsetzrichtung in das bzw. ihre Entnahmerichtung aus dem Gehäuse andererseits weitgehend zusammen fallen. Die Trennebene verläuft im Wesentlichen quer, also exakt oder weitgehend orthogonal zur Spindelachse, kann aber auch zwischen dem unteren und oberen Segment abgestuft sein.

Die Erfindung geht von einer Spindelbrüheinheit aus, wie sie detailliert auch in der Anmeldung Nr. 201203693 des Anmelders vom selben Anmeldetag beschrieben ist, die diesbezüglich zum Inhalt auf der vorliegenden Anmeldung gemacht wird. Die Gewindespindel ist zwischen dem Bodenabschnitt und dem Deckenabschnitt im Gehäuse der Spindelbrüheinheit gelagert und steht senkrecht oder geneigt zu einer Aufstandsfläche des Kaffeevollautomaten. Während eines Brühvorgangs befindet sich die Brühkammer am oberen Segment, an dem der Brühkolben hängt. Die Brühkammer ist über die Länge der Gewindespindel und damit zwischen beiden Segmenten entlang der Spindelachse verfahrbar. Ein Brühkammergehäuse umfasst die Brühkammer und einen Verbindungsarm zwischen der Brühkammer und der Gewindespindel, der zugleich als Spindelmutter dient.

Eine herkömmliche Trennung der Gehäusesegmente entlang der Spindelachse erfordert eine Montage der Gewindespindel in Lagereinrichtungen von der Seite bzw. in einer Richtung orthogonal zur Spindelachse. Die Lagersitze können z. B. als Lagerschalen ausgebildet sein, die halbiert an beiden Gehäuseelementen liegen. Dies bringt unter Umständen erhöhte Toleranzen und somit eine erhöhte Geräuschentwicklung mit sich. Demgegenüber ermöglicht die Erfindung ein Einsetzen der Gewindespindel zwischen die beiden Segmente in die Lagereinrichtungen jeweils in axialer Richtung. Dazu weisen das obere und das untere Segment Öffnungen zum Einführen der Gewindespindel auf. Die erfindungsgemäße Trennung des Gehäuses bietet den Vorteil, dass das obere und das untere Segment jeweils mit betriebsfertigen Lagereinrichtungen ausgebildet sein können. Geeignete radial geschlossene Lagerschalen bzw. Lagersitze können einteilig oder gar einstückig mit den Segmenten hergestellt werden, so dass sie ggf. nur geringe Toleranzen bieten. Dies ermöglicht eine vereinfachte Gestaltung des Gehäuses der Spindelbrüheinheit und eine einfache Montage der Spindel durch axiales Einsetzten. Eine separate Ausbildung der Lagereinrichtungen wird damit obsolet. Dies vereinfacht und verbilligt die Montage der Spindelbrüheinheit sowie ihre Zerlegbarkeit zu Reparaturzwecken.

Während des Brühvorgangs wird die Brühkammer nach oben gegen den Brühkolben verfahren und mit unter Druck stehendem Zubereitungswasser beaufschlagt. Infolge der Lage der Brühkammer an dem auskragenden Verbindungsarm wirkt ein Kippmoment auf das Gehäuse der Brühkammer. Der Drehpunkt dafür kann auf der Spindelachse angenommen werden. Nach einer bevorzugten Ausführungsform des Kaffeevollautomaten kann das obere Segment eine Stützfläche umfassen, die das Gehäuse der Brühkammer gegen das Kippmoment während eines Brühvorgangs abstützt. Unter dem Begriff der "Stützfläche" wird deshalb eine der Abstützung des Brühkammergehäuses dienende Fläche im oberen Segment verstanden. Die Stützfläche ist demnach die Fläche, an dem eine Gegenstützfläche am Brühkammergehäuse während eines Brühvorgangs anliegt. Die Stützfläche wirkt dem Kippmoment durch ein Abstützen des Brühkammergehäuses entgegen, sobald jenes durch das Kippmoment beaufschlagt wird. Sie kann dazu jede horizontale, vertikale oder geneigte Orientierung aufweisen, die eine Anlage des Brühkammergehäuses ermöglicht, ohne ein bestimmungsgemäßes Verfahren der Brühkammer zu behindern. Die Stützfläche kann an einer separaten Schiene oder an einer Begrenzungsfläche des oberen Gehäusesegments der Spindelbrüheinheit liegen, die dem Brühkammergehäuse in der Brühposition unmittelbar benachbart liegt. Sie korrespondiert mit einer Gegenfläche am Brühkammergehäuse, die beim Brühvorgang auf die Stützfläche drückt. Bei geeigneten Platzverhältnissen, insbesondere bei einem ausreichend großen Abstand zwischen der Gewindespindel und der Brühkammer, kann die korrespondierende Gegenstützfläche auch in einem Durchbruch oder einer Nut im Brühkammergehäuse, insbesondere in einem Zwischenraum zwischen der Gewindespindel und der Brühkammer, angeordnet sein.

Das Kippmoment auf das Brühkammergehäuse wirkt auf die Spindel als Biegemoment, das u. a. die Lagerung der Spindel beeinträchtigen kann. Eine Aufnahme des Kippmoments des Brühkammergehäuses bietet den Vorteil, dass ein Verbiegen oder Verwinden der Gewindespindel bei einem Brühvorgang verhindert bzw. zumindest reduziert wird. Die erfindungsgemäße Stützfläche bewirkt letztlich eine geringere Materialbeanspruchung und eine verminderte Geräuschentwicklung beim Brühvorgang.

Damit sich das Brühkammergehäuse in seiner Brühposition an der Stützfläche abstützen kann, wird es möglichst eng an die Stützfläche herangefahren bzw. mit ihr zur Anlage gebracht. Unter Wirkung des Kippmoments verkippt die Brühkammer, so dass sie nur mit einer Teilfläche ihrer Gegenstützfläche an der Stützfläche anliegt. Je geringer der Abstand zwischen dem Brühkammergehäuse und der Stützfläche, um so größer ist die Teilfläche und um so geringer ist ein Verkippweg des Brühkammergehäuses, bis es an der Stützfläche anliegt.

Prinzipiell kann die Stützfläche eine zur Spindelachse orthogonal verlaufende obere Begrenzungsfläche im oberen Segment darstellen, an der der Brühkolben liegt und gegen die die Brühkammer verfahren wird. Kommt das Brühkammergehäuse an ihr zur Anlage, kann dadurch das Brühkammergehäuses gegen Verkippen abgestützt und das Kippmoment aufgenommen werden. Die Brühkammer kann jedoch unterschiedliche Brühpositionen, d. h. Distanzen relativ zum Brühkolben einnehmen. Ihre jeweilige Brühposition wird durch Faktoren wie z. B. der bei einem Brühvorgang verwendeten Menge und dem Mahlgrad des Kaffeepulvers bestimmt.

Eine waagrechte Gehäusefläche des Brühkammergehäuses als Gegenstützfläche kann daher während verschiedener Brühvorgänge auf unterschiedlichen Höhenpositionen liegen. Ihr Abstand zu einer ebenfalls waagrechten Stützfläche kann bei verschiedenen Brühvorgängen unterschiedlich groß sein. Gemäß einer bevorzugten Ausgestaltungsform der Erfindung kann die Stützfläche am oberen Segment daher parallel zur Spindelachse bzw. vertikal verlaufen. Sie kann jeder vertikal verlaufenden Seite des Brühkammergehäuses zugewandt sein und mit ihr als Gegenstützfläche zusammenwirken. Diejenigen potenziellen Brühpositionen der Brühkammer, die in maximaler und in minimaler Entfernung zum Brühkolben liegen, bestimmen eine vertikale Längenerstreckung der Stützfläche bzw. der Gegenstützfläche. Die Stützfläche reicht dabei mindestens so weit wie eine Gegenstützfläche am Brühkammergehäuse. Der Vorteil einer Lage der Stützfläche parallel zur Spindelachse besteht also darin, dass sie unabhängig von der Brühposition deren Verkippen verhindern kann.

Vorzugsweise kann das obere Segment mindestens eine Stützschiene mit einer daran angeordneten Stützfläche parallel zur Spindelachse umfassen. Auch die Stützschiene steht zur Minimierung der Hebelwirkung beim Auftreten eines Verkippmoments vorzugsweise möglichst nahe an der Brühkammer und liegt während eines Brühvorgangs an einer Gegenstützfläche des Brühkammergehäuses an. Die Stützschiene kann einen besonders belastbaren Querschnitt aufweisen, das obere Segment also lokal verstärken und als dreidimensionales Bauteil eine oder mehrere Stützflächen tragen, die dann vorzugsweise eine identische vertikale Ausdehnung aufweisen. Eine einzige Stützschiene liegt vorzugsweise in einer virtuellen Ebene mit der Brühkammerachse und der Spindelachse, um eine asymmetrische Belastung des Brühkammergehäuses durch die Stützlast zu vermeiden. Bei einer Anordnung zweier Stützschienen liegen die Stützflächen ebenfalls vorzugsweise symmetrisch zur Brühkammerachse, um unter Last nicht ihrerseits ein Stützmoment zu erzeugen. Eine Mehrzahl von Stützflächen bzw. Stützschienen bietet den Vorteil, dass das Kippmoment des Brühkammergehäuses an mehreren Flächen abgestützt und damit die Stützlast auf das Brühkammergehäuse verteilt wird.

Gemäß der Anmeldung Nr. 201203693 des Anmelders vom selben Anmeldetag kann das Gehäuse Führungsflächen umfassen. Sie können als Gleitführungen ausgebildet sein, die das Brühkammergehäuse entlang der Spindelachse führen, indem sie an korrespondierenden Gegenflächen am Brühkammergehäuse anliegen. Sie verhindern ein Mitdrehen des Brühkammergehäuses auf der Spindel, indem sie ein Gegenmoment zum Drehmoment der Spindeldrehung bewirken. Dadurch bewegt sich das Brühkammergehäuse als Spindelmutter relativ zur Spindel. Nach einer weiteren bevorzugten Ausgestaltungsform kann das erfindungsgemäße Gehäuse bzw. können das obere Segment und/oder das untere Segment mindestens zwei Führungsflächen zum Führen der Brühkammer bei einem Verfahren entlang der Gewindespindel ausbilden, die folglich parallel zur Spindel und weitgehend über deren gesamte Länge verlaufen. Aufgrund der gegenläufigen Spindeldrehung kann eine einzige Führungsfläche lediglich ein Verfahren in einer Richtung bewirken. Das Auf- und Abfahren erfordert daher zwei Führungsflächen. Als ein Paar von Führungsflächen kann z. B. eine Verfahrschiene mit zwei entsprechenden Flächen an zwei ihrer Seiten dienen. Den gleichen Zweck erfüllen zwei Verfahrschienen mit jeweils einer Führungsfläche. Die Führungsflächen können gleichermaßen an einer Kulisse liegen. Die Trennebene zwischen dem oberen und dem unteren Segment kann jede Führungsfläche in zwei Abschnitte durchschneiden, die übergangslos aneinander anschließen können. Alternativ kann ein Parallelversatz zwischen der Führungsfläche am oberen Segment und derjenigen am unteren Segment ausgebildet sein. Nach einer weitern Alternative können die Führungsflächen am oberen und am unteren Segment in unterschiedlichen Ebenen liegen, solange Führungsflächen für jede Verfahrrichtung ein Gegenmoment zum Drehmoment der Spindeldrehung bewirken Die beiden Gehäusesegmente sind also dazu ausgebildet, dass weitgehend unabhängig von der Trennebene Führungsflächen für das Verfahren der Brühkammer vorhanden sind.

Nach einer weiteren vorteilhaften Ausgestaltung der Erfindung können die Führungsflächen des oberen Segments zugleich als Stützflächen dienen. Zwei Führungsflächen am oberen Segment können folglich zusätzlich und abschnittsweise die Funktion von vertikalen Stützflächen übernehmen. Dazu können ihre Abschnitte mit der Doppelfunktion verstärkt ausgebildet sein. Denn die Belastungen der Stützflächen liegen deutlich über denjenigen der Führungsflächen. Die Abschnitte mit Führungs- und zugleich Stützflächen können vorzugsweise symmetrisch zur Brühkammerachse angeordnet sein, um einerseits das Kippmoment während eines Brühvorgangs gleichmäßig abzustützen und um andererseits die Brühkammer sowohl beim Aufwärtsfahren als auch in der Gegenrichtung führen zu können. Diese Ausgestaltungsform bietet den Vorteil, dass separate Flächen, die ausschließlich als Stützflächen oder als Führungsflächen dienen, eingespart werden können. Alternativ kann das Kippmoment sowohl an den Führungs- und Stützflächen als auch an zusätzlichen Stützflächen abgestützt werden. Die zusätzlichen Stützflächen können dann schwächer ausgelegt werden, als wenn sie allein die Stützkraft aufnehmen müssten.

Einer alternativen Ausführungsform gemäß kann das untere Segment des Gehäuses der Spindelbrüheinheit nur eine Führungsfläche aufweisen und damit ein Verschwenken der Brühkammer zulassen. Das Verschwenken wird durch eine führungsfreie Ausbildung des unteren Segments an Stelle einer Führungsfläche bewirkt. Mit einer der beiden Führungsflächen entfällt einseitig ein Widerstand gegen das Mitdrehen der Brühkammer auf der Spindel, sodass sie Brühkammer mit der Spindel aus- und einschwenkt. Die führungsfreie Ausbildung kann beispielsweise durch eine Gehäuseaussparung oder durch ein Unterbrechen oder ein Weglassen einer zweiten Führungsfläche realisiert werden.

Nach einer weiteren vorteilhaften Ausgestaltung der Erfindung kann das obere Segment zwei Stützschienen mit jeweils einer daran angeordneten Stützfläche und zwei Verfahrschienen mit jeweils einer daran angeordneten Führungsfläche umfassen, deren Stützflächen jeweils weitgehend senkrecht zum Kippmoment des Verbindungsarms und einander gegenüber stehen, wobei sie paarweise symmetrisch die Gewindespindel umrahmen. Die Stützschienen können ebenso lang wie die Verfahrschienen oder kürzer sein. Eine längere Ausbildung als die Verfahrschienen erweist sich nur dann als sinnvoll, wenn die Führungsflächen an den Verfahrschienen kürzer sind als die Führungsflächen an den Stützschienen respektive die korrespondierenden Gegenstützflächen am Brühkammergehäuse. Dies kann bei einer abgestuft verlaufenden Trennebene der Fall sein, bei der die Stützschienen über die Verfahrschienen nach unten hinaus ragen. Beide können zum Abstützen eines Kippmoments der Brühkammer und zu ihrem Verfahren dienen. Die insgesamt vier Stützflächen sorgen vorteilhafterweise für eine gleichmäßige Verteilung des Kippmoments des Brühkammergehäuses und seine Ableitung in das Gehäuse der Spindelbrüheinheit. Sie können derart angeordnet sein, dass sie die Gewindespindel punktsymmetrisch umrahmen. Die Gewindespindel wird somit zuverlässig gegen ein Biegemoment geschützt.

Prinzipiell können die Führungs- und Stützflächen des Gehäuses z. B. in Form von Schienen an einem Gitterrahmen ausgebildet sein. Gemäß einer bevorzugten Ausführungsform können die Führungsflächen und/oder die Stützflächen als Flächen ausgebildet sein, die insbesondere an Flächen oder Kanten des Gehäuses liegen. Diese Ausgestaltung kann für das erste und/oder das zweite Segment gelten. Eine Anordnung der Führungsflächen und/oder Stützflächen im Bereich von Gehäusekanten kann die Verwendung von separaten Stützschienen und/oder Verfahrschienen einsparen und so eine konstruktive Komplexität des Gehäuses verringern. Dadurch vereinfacht sich die Herstellung der Spindelbrüheinheit. Zusätzlich bieten Flächen an Kanten bei gleicher Wandstärke eine höhere Druckfestigkeit als frei tragende Flächen. Innenkanten können darüber hinaus eine unterstützende Funktion als Seitenführungen erfüllen.

Grundsätzlich können das erste und das zweite Segment des Gehäuses der Spindelbrüheinheit jeweils aus mehreren Teilsegmenten bestehen. Nach einer weiteren bevorzugten Ausführungsform kann der erfindungsgemäße Kaffeevollautomat eine einteilige Ausbildung zumindest eines der beiden Segmente mit der/den Führungsfläche(n) und/oder der/den Stützfläche(n) und einer Lagerung der Gewindespindel aufweisen. Dies bietet den Vorteil einer einfachen und daher kostengünstigen Fertigung der Segmente, z. B. als Kunststoff-Spritzgussteile. Ein einteiliges (Teil-) Gehäuse bewirkt kurze Toleranzketten zwischen den als Gleitführungen ausgeprägten Führungs- und Stützflächen. Damit begünstigt es zum Einen eine lange Lebensdauer und eine geringe Geräuschentwicklung insbesondere beim Verfahren der Brühkammer. Zum Anderen können dadurch geringere Wandstärken der (Teil-) Gehäuse mit weniger Rippen zur Verstärkung sowie günstigere Materialien verwandt werden. Das obere Segment kann z. B. an fünf Seiten geschlossen ausgebildet sein, sodass es eine besonders hohe Kompaktheit und Belastbarkeit aufweist. Es muss an seiner Unterseite zumindest Öffnungen zum Einführen der Gewindespindel und der über einen Verbindungsarm an der Spindel gelagerten Brühkammer aufweisen. Das obere Segment kann den Brühkolben umfassen, indem dieser z. B. integraler Bestandteil seines Spritzgussgehäuses ist. Der Brühkolben kann alternativ auch als separates Teil und dabei zumindest geringfügig verschiebbar am oberen Segment befestigt sein, um auftretende Toleranzen zwischen dem Brühkolben und der Brühkammer ausgleichen zu können.

Das Prinzip der Erfindung wird im Folgenden anhand von Zeichnungen beispielshalber noch näher erläutert. Es zeigen
- Figur 1a:: einen schematischen Vertikalschnitt einer Spindelbrüheinheit eines Kaffeevollautomaten in einer ersten Position,
- Figur 1b:: eine Detailansicht der Spindelbrüheinheit gemäß Fig. 1a entlang einer Schnittebene I,
- Figur 2a:: einen mit Fig. 1a vergleichbaren Vertikalschnitt in einer zweiten Position,
- Figur 2b:: eine Detailansicht gemäß Fig. 2a entlang einer Schnittebene II,
- Figur 3a:: einen mit Fig. 2a vergleichbaren Vertikalschnitt in einer veränderten Schnittebene,
- Figur 3b:: eine Detailansicht gemäß Fig. 3a entlang einer Schnittebene III.

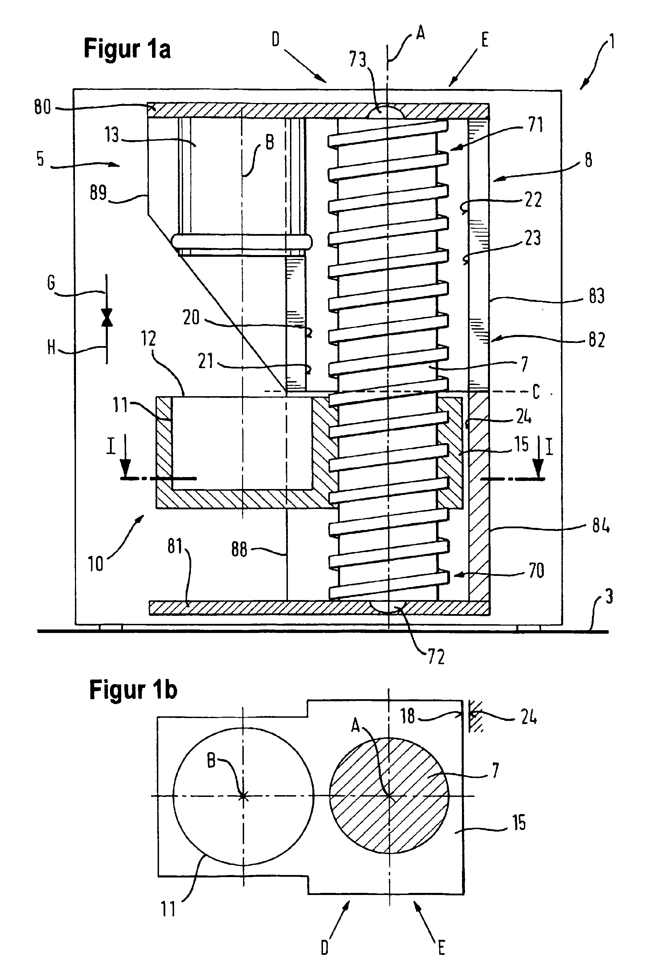

Figur 1a zeigt überblicksartig einen schematischen Vertikalschnitt durch einen Kaffeevollautomaten 1, der auf einer horizontalen Aufstandsfläche 3 steht, zum Beispiel einer Küchenarbeitsplatte. Innerhalb des Kaffeevollautomaten 1 ist eine Spindelbrüheinheit 5 angeordnet, die ein C-förmiger Aufnahmerahmen 8 umgibt. Der Rahmen 8 besteht aus einem Gehäuseunterteil 88 und einem Gehäuseoberteil 89 als Segmente des Rahmens 8, die an einer waagerechten Trennebene C aneinander montiert sind. Das Gehäuseunterteil 88 umfasst eine horizontale Bodenplatte 81 und ein Unterteil 84 eines vertikalen Ständers 82. Das Gehäuseoberteil 89 umfasst eine horizontale Deckplatte 80 und ein Oberteil 83 des Ständers 82.

Im Rahmen 8 sind eine Gewindespindel 7 und eine Brühvorrichtung 10 mit einer Brühkammer 11 und einem Brühkolben 13 als Spindelbrüheinheit 5 angeordnet. Der Brühkolben 13 hängt an der auskragenden Deckplatte 80. Zwischen der Deckplatte 80 und der Bodenplatte 81 steht vertikal die Gewindespindel 7, wobei ihr unteres Ende 70 und ihr oberes Ende 71 jeweils in einer Lagerschale 72 bzw. 73 drehbar gelagert ist. Die Spindel 7 ist mit einem nicht dargestellten Antrieb, zum Beispiel einem Elektromotor, verbunden. Die Lagerschalen 72, 73 sind jeweils Bestandteil des Gehäuseunterteils 88 bzw. des Gehäuseoberteils 89. Sie werden jeweils bei der Herstellung des Gehäuseunterteils 88 bzw. des Gehäuseoberteils 89 einstückig mit ihnen ausgebildet. Die Spindel 7 wird daher axial in die Lagerschalen 72, 73 eingesetzt.

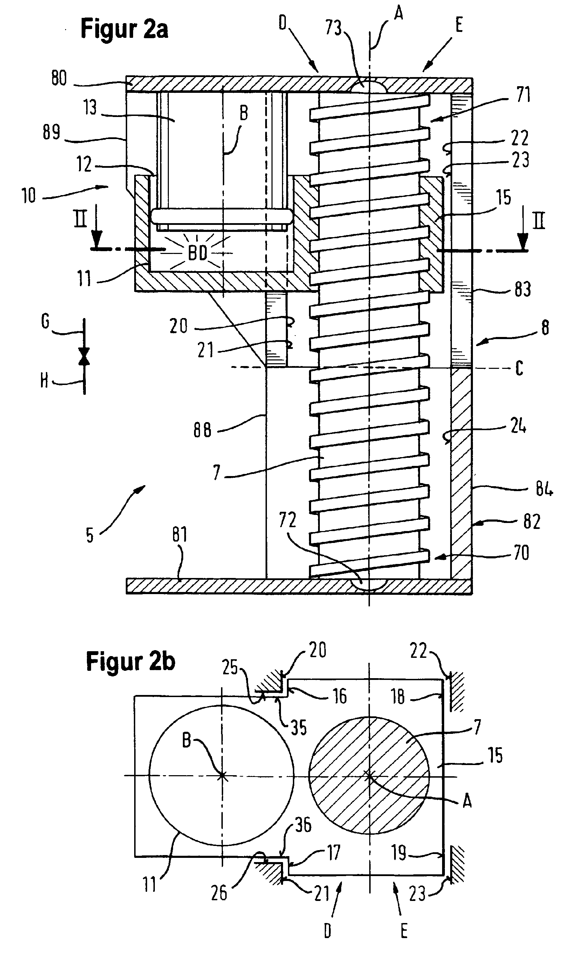

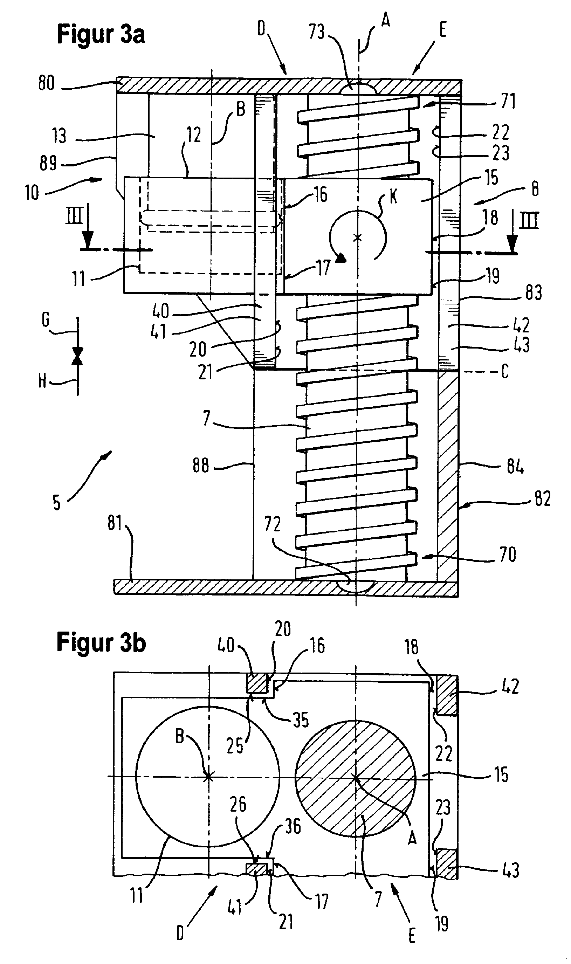

Die Brühkammer 11 ist als zylindrischer Hohlkörper ausgebildet, in den durch dessen oberseitige Öffnung 12 der ebenfalls zylindrische Brühkolben 13 eingefahren werden kann. Die Längsachse B der Brühkammer 11 verläuft in der abgebildeten Position (und den folgenden Positionen gemäß Figur 2 und 3) koaxial zu einer Längsachse des Brühkolbens 13. Ein waagerechter Verbindungsarm eines Brühkammergehäuses 15 als Spindelmutter verbindet die Brühkammer 11 mit der Gewindespindel 7.

Figur 1a/1b zeigen die Brühkammer 11 und das Brühkammergehäuse 15 in einer ausgefahrenen Position im Bereich des Gehäuseunterteils 88. Sie sind in den Figuren 2a/2b und 3a/b dagegen in einer eingefahrenen Brühposition im Bereich des Gehäuseoberteils 89 dargestellt. Im Folgenden wird der erfindungsgemäße Kaffeevollautomat 1 ggf. auch mit Bezug auf die Figuren 2 und 3 erläutert.

Die vertikale Führung des Brühkammergehäuses 15 im Rahmen 8 übernehmen zwei vertikal am Oberteil 83 verlaufende Führungsflächen 22, 23, die an ebenfalls vertikalen Gegenflächen 18, 19 des Brühkammergehäuses 15 anliegen (siehe Figur 2b). Die Führungsflächen 22, 23 stehen zur Gewindespindel 7 bzw. zur Brühkammer 11 gewandt und symmetrisch bezüglich der Spindelachse A und der Brühkammerachse B. Sie erstrecken sich vertikal von der Trennebene C bis zur Deckplatte 80 (siehe Figur 1a/2a/3a). Die Gegenflächen 18, 19 liegen den Führungsflächen 22, 23 jeweils gegenüber (Figur 2b). Das Verfahren der Brühkammer 11 unterstützt ein Paar weiterer Führungsflächen 25, 26, die ebenfalls vertikal im Gehäuse 8 stehen, aber um 90° verdreht zu den Führungsflächen 22, 23 angeordnet sind (siehe Figur 2b). Sie sind ebenso lang wie die Führungsflächen 22, 23 und verhindern wie diese ein Verdrehen des Brühkammergehäuses 15 im oberen Gehäuseteil 89, indem sie an Gegenflächen 35, 36 am Brühkammergehäuse 15 anliegen. Eine Linksdrehung der Gewindespindel 7 um eine Drehachse A verfährt die Brühkammer 11 demnach in einer Richtung G vom Brühkolben 13 aus abwärts, eine Rechtsdrehung in einer Richtung H zum Brühkolben 13 hin bzw. aufwärts.

Am Gehäuseunterteil 88 dagegen ist das Brühkammergehäuse 15 an nur einer einzigen Führungsfläche 24 vertikal geführt (siehe Figur 1 b). Sie erstreckt sich von der Trennebene C bis zur Bodenplatte 81 und setzt den Verlauf der oberen Führungsfläche 22 vertikal abwärts fort. Da im unteren Gehäuseteil 88 eine der oberen Führungsfläche 23 vergleichbare Fläche fehlt, wird das Brühkammergehäuse 15 nur bei einer Rechtsdrehung der Gewindespindel 7 an einem Mitdrehen gehindert. Sie verfährt die Brühkammer 11 aus der in Figur 1 gezeigten Position in der Richtung H aufwärts. Bei einer Linksdrehung dagegen wird das Brühkammergehäuse 15 an einem Mitdrehen nicht gehindert und schwenkt daher nach links. Damit verschwenkt auch die Brühkammer 11 aus der gezeigten Position nach links bzw. aus der Zeichnungsebene heraus auf den Betrachter zu.

Das Gehäuseoberteil 89 weist darüber hinaus zwei vertikale Stützflächen 20, 21 auf (siehe Figuren 2a/2b). Sie sind zum Verfahren des Brühkammergehäuses 15 nicht notwendig, unterstützen es aber, indem sie beim Verfahren wie die Führungsflächen 22, 23 an Gegenflächen 16, 17 des Brühkammergehäuses 15 anliegen und ein Mitdrehen der Brühkammer 11 mit der Spindel 7 verhindern (siehe Figuren 3a/3b). Während die am Ständer 82 angeordneten Führungsflächen 22, 23 auf einer rechten Seite E des Brühkammergehäuses 15 neben der Gewindespindel 7 liegen, sind die Stützflächen 20, 21 auf einer gegenüberliegenden, linken Seite D platziert. Aufgrund von Toleranzen und bei auch nur geringem Spiel zwischen dem Brühkammergehäuse 15 und der Spindel 7 und verkippt die Brühkammer 11 infolge der Schwerkraft leicht gegenüber der Spindel 7, wenn die Gegenflächen 16, 17 nicht in Eingriff mit den Stützflächen 20, 21 stehen. Die Stützflächen 20, 21 justieren also die Brühkammer 11, richten Sie weitgehend waagerecht aus und gewährleisten damit, dass bei der Einleitung eines Brühvorgangs der Brühkolben 13 stets in die Brühkammer 11 trifft.

Die Schnittansichten der Figuren 2a und 3a stellen eine Brühposition dar. Die Brühkammer 11 wurde gegen den Brühkolben 13 verfahren, um Kaffeepulver zu verdichten. Anschließend wird Zubereitungswasser unter hohem Brühdruck BD in die Brühkammer 11 eingeleitet. Der Brühdruck BD wird einerseits über den Brühkolben 13 und damit über die Deckplatte 80 im Rahmen 8 aufgenommen. Andererseits übt er über die Brühkammer 11 auf das Brühkammergehäuse 15 ein Kippmoment K aus, dessen Drehpunkt etwa auf der Spindelachse A angenommen werden kann. Die Spindel 7 könnte sich infolgedessen unerwünscht verwinden bzw. verbiegen.

Erfindungsgemäß umrahmen die Stützflächen 20, 21 und die Führungsflächen 22, 23 die Spindelachse A allseits, vorliegend einander paarweise gegenüberliegend und nahezu punktsymmetrisch. Sie stützen das Brühkammergehäuse 15 an seinen Gegenflächen 16, 17, 18, 19 gegen ein Verkippen ab. Damit wird das Kippmoment K bereits von den Stützflächen 20, 21 und den Führungsflächen 22, 23, also vom Gehäuseoberteil 83 aufgenommen, bevor es auf die Spindel 7 wirken kann. Die paarweise symmetrische Lage gegenüber der Brühkammerachse B (siehe Figur 2b) bewirkt ein gleichmäßiges Abstützen, ohne selbst ein Stützmoment hervorzurufen. Dies verhindert bzw. reduziert jegliche unerwünschte Belastung der Gewindespindel 7 aus dem Brühdruck BD. Die Anordnung der Stützflächen 20, 21 in kurzer Distanz zur Brühkammerachse B vermindert außerdem die Biegebelastung auf das Brühkammergehäuse 15. Da die Führungsflächen 22, 23 derart angeordnet sind, dass sie dem Kippmoment K ebenfalls entgegenstehen, wirken sie ebenfalls als Stützflächen, übernehmen erfindungsgemäß also eine Doppelfunktion. Da das Kippmoment K damit auf mehrere Flächen 20, 21, 22, 23 verteilt werden kann, sinkt die Flächenpressung auf jede einzelne dieser Flächen 20, 21, 22, 23. Dadurch können die Materialanforderungen zur Ausbildung der Flächen 20, 21, 22, 23 geringer ausfallen, was Kostenvorteile bietet.

Figur 3b zeigt zusätzlich, dass die Stützflächen 20, 21 und die Führungsflächen 22, 23, 25, 26 an vertikalen Rippen 40, 41, 42, 43 liegen. Die Stützflächen 20, 21 sowie die Führungsflächen 25, 26 auf der Seite D des Brühkammergehäuses 15 sind den Rippen 40, 41 zugeordnet, die Führungsflächen 22, 23 auf der Seite E den Rippen 42, 43. Die Rippen 40, 41, 42, 43 sind Bestandteile des Gehäuseoberteils 89 und leiten damit Kräfte und Momente unmittelbar in das Gehäuseoberteil 89 ein.

Für eine kraftflussgerechte Aufnahme der Zug- und Druckbelastungen im Gehäuseoberteil 89 ist es an fünf Seiten, d. h. durch die Deckplatte 80 und an den vier Seitenflächen, die die Rippen 40, 41, 42, 43 tragen, geschlossen ausgebildet. Dies ermöglicht eine einteilige und damit kostengünstige Ausbildung des Gehäuseoberteils 89 als Kunststoff-Spritzgussteil. Da die größten Belastungen beim Brühen auftreten und sowohl der Brühkolben 13 als auch die Stützflächen 20, 21 und die als Stützflächen wirkenden Führungsflächen 22, 23 im Gehäuseoberteil 89 angeordnet sind, bleiben die Belastungen auf das Gehäuseoberteil 89 beschränkt. Daraus resultieren kurze Toleranzketten zwischen den Stützflächen 20, 21, 22, 23 und der oberen Lagerung der Spindel 7. Außerdem bleibt nicht nur das Gehäuseunterteil 88, sondern vor allem auch deren Koppelungsstelle in der Trennebene C weitgehend unbelastet. Von der offenen sechsten Seite des Gehäuseoberteils 89 aus kann die Gewindespindel 7 direkt in ihren oberen Lagersitz 73 eingesetzt und durch Montage des Gehäuseunterteils 88 im unteren Lagersitz 72 positioniert werden (oder umgekehrt), womit die Spindel 7 im Gehäuse 8 komplett montiert ist.

Da es sich bei dem vorhergehenden, detailliert beschriebenen Kaffeevollautomaten um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen der Stützflächen in anderer Form als in der hier beschriebenen erfolgen. Ebenso können die Führungsflächen in einer anderen Form ausgestaltet sein, wenn dies aus Platzgründen bzw. designerischen Gründen notwendig ist. Der Gegenstand der Erfindung lässt sich zudem mit den Lehren der Anmeldungen Nr. 201203222 und Nr. 201203223 des Anmelders vom selben Tage vorteilhaft kombinieren. Weiter schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 3: Aufstandsfläche
- 5: Spindelbrüheinheit
- 7: Gewindespindel
- 8: Gehäuse der Spindelbrüheinheit 5
- 10: Brühvorrichtung
- 11: Brühkammer
- 12: Öffnung
- 13: Brühkolben
- 15: Brühkammergehäuse
- 16 bis 19: Gegenflächen des Gehäuses der Brühkammer 11
- 20 bis 21: Stützflächen des Gehäuses 8
- 22 bis 26: Führungsflächen des Gehäuses 8
- 35 bis 36: Gegenflächen des Gehäuses der Brühkammer 11
- 40 bis 43: Rippe
- 70: unteres Ende der Gewindespindel 7
- 71: oberes Ende der Gewindespindel 7
- 72 bis 73: Lagerschalen
- 80: Deckplatte des Gehäuses 8
- 81: Bodenplatte des Gehäuses 8
- 82: Ständer des Gehäuses 8
- 83: Oberteil des Ständers 82
- 84: Unterteil des Ständers 82
- 88: Unterteil des Gehäuses 8
- 89: Oberteil des Gehäuses 8

- A: Spindelachse
- B: Brühkammerachse
- BD: Brühdruck
- C: Trennebene
- D und E: Seiten
- G und H: Richtungen
- K: Kippmoment

## Patentansprüche

1. Kaffeevollautomat (1), umfassend eine Spindelbrüheinheit (5) mit einer Brühvorrichtung (10) aus einer Brühkammer (11) und einem Brühkolben (13), eine Gewindespindel (7) zum Antrieb der Brühkammer (11) über einen Verbindungsarm (15) als Spindelmutter, wobei die Brühvorrichtung (10) seitlich neben der Gewindespindel (7) angeordnet ist, weiterhin umfassend ein C-förmiges Gehäuse (8, 88, 89) mit einem Ständerabschnitt (82, 83, 84) entlang der Gewindespindel (7), einem Bodenabschnitt (81) sowie einem Deckenabschnitt (80), die jeweils orthogonal zur Gewindespindel (7) liegen, wobei das Gehäuse (8, 88, 89) zur Lagerung der Brühvorrichtung (10) und der Gewindespindel (7) dient und in ein erstes Segment (81, 84, 88) und ein zweites Segment (80, 83, 89) trennbar ist,
**dadurch gekennzeichnet, dass** eine Trennebene (C) im Wesentlichen quer zur Spindelachse (A) das Gehäuse (8, 88, 89) in ein unteres Segment (81, 84, 88) und ein oberes Segment (80, 83, 89) teilt.

2. Kaffeevollautomat nach Anspruch 1, **dadurch gekennzeichnet, dass** das obere Segment (80, 83, 89) eine Stützfläche (20, 21, 22, 23) umfasst, die das Gehäuse (15) der Brühkammer (11) während eines Brühvorgangs gegen ein Kippmoment (K) abstützt.

3. Kaffeevollautomat nach Anspruch 2, **dadurch gekennzeichnet, dass** die Stützfläche (20, 21, 22, 23) parallel zur Spindelachse (A) verläuft.

4. Kaffeevollautomat nach Anspruch 2 oder 3, **dadurch gekennzeichnet, dass** das obere Segment (80, 83, 89) mindestens eine Stützschiene (40, 41) mit einer daran angeordneten Stützfläche (20, 21) umfasst.

5. Kaffeevollautomat nach einem der vorhergehenden Ansprüche, **dadurch gekennzeichnet, dass** das Gehäuse (8, 88, 89) mindestens zwei Führungsflächen (22, 23, 24, 25, 26) zum Führen der Brühkammer (11) bei einem Verfahren entlang der Gewindespindel (7) ausbildet, die parallel zur Spindelachse (A) verlaufen.

6. Kaffeevollautomat nach Anspruch 4 oder 5, **dadurch gekennzeichnet, dass** die Führungsflächen (22, 23) des oberen Segments (80, 83, 89) als Stützflächen dienen.

7. Kaffeevollautomat nach Anspruch 5 oder 6, **dadurch gekennzeichnet, dass** das untere Segment (81, 84, 88) nur eine Führungsfläche aufweist und damit ein Verschwenken der Brühkammer (11) bewirkt.

8. Kaffeevollautomat nach einem der Ansprüche 5 bis 7, **dadurch gekennzeichnet, dass** das obere Segment (80, 83, 89) zwei Stützschienen (40, 41) mit jeweils einer daran angeordneten Stützfläche (20, 21) und zwei Verfahrschienen (42, 43) mit jeweils einer daran angeordneten Führungsfläche (22, 23) umfasst, deren Stützflächen (20, 21, 22, 23) einerseits jeweils weitgehend senkrecht zum Kippmoment (K) des Verbindungsarms (15) stehen und andererseits einander gegenüber stehen, wobei sie paarweise symmetrisch die Gewindespindel (7) umrahmen.

9. Kaffeevollautomat nach einem der Ansprüche 5 bis 8, **gekennzeichnet durch** eine Ausbildung der Führungsflächen (22, 23, 24, 25, 26) und/oder der Stützflächen (20, 21, 22, 23) als Flächen, insbesondere an Kanten des Gehäuses (8, 88, 89).

10. Kaffeevollautomat nach einem der Ansprüche 5 bis 8, **gekennzeichnet durch** eine einteilige Ausbildung zumindest eines der Segmente (80, 83, 81, 84, 88, 89) mit der/den Führungsfläche(n) (22, 23, 24, 25, 26) und/oder der/den Stützfläche(n) (20, 21, 22, 23) und einer Lagerung (72, 73) der Gewindespindel (7).

## Claims

1. Fully automatic coffee machine (1) comprising a spindle brewing unit (5) with a brewing apparatus (10) consisting of a brewing chamber (11) and a brewing piston (13), a threaded spindle (7) for driving the brewing chamber (11) via a connecting arm (15) as spindle nut wherein the brewing apparatus (10) is disposed to the side next to the threaded spindle (7), further comprising a C-shaped housing (8, 88, 89) with a stand section (82, 83, 84) along the threaded spindle (7), a floor section (81) and also a roof section (80), which each lie orthogonally to the threaded spindle (7), wherein the housing (8, 88, 89) serves to support the brewing apparatus (10) and the threaded spindle (7) and is able to be separated into a first segment (81, 84, 88) and a second segment (80, 83, 89),
**characterised in that** a separation plane (C) essentially transverse to the spindle axis (A) divides the housing (8, 88, 89) into a lower segment (81, 84, 88) and an upper segment (80, 83, 89).

2. Fully automatic coffee machine according to claim 1, **characterised in that** the upper segment (80, 83, 89) includes a support surface (20, 21, 22, 23) which supports the housing (15) of the brewing chamber (11) against a tipping moment (K) during a brewing process.

3. Fully automatic coffee machine according to claim 2, **characterised in that** the support surface (20, 21, 22, 23) runs in parallel to the spindle axis (A).

4. Fully automatic coffee machine according to claim 2 or 3, **characterised in that** the upper segment (80, 83, 89) comprises at least one support rail (40, 41) with a support surface (20, 21) disposed thereon.

5. Fully automatic coffee machine according to one of the preceding claims, **characterised in that** the housing (8, 88, 89) forms at least two guide surfaces (22, 23, 24, 25, 26) for guiding the brewing chamber (11) during a movement along the threaded spindle (7), which run in parallel to the spindle axis (A).

6. Fully automatic coffee machine according to claim 4 or 5, **characterised in that** the guide surfaces (22, 23) of the upper segment (80, 83, 89) serve as support surfaces.

7. Fully automatic coffee machine according to claim 5 or 6, **characterised in that** the lower segment (81, 84, 88) only has one guide surface and thus has the effect of tilting the brewing chamber (11).

8. Fully automatic coffee machine according to one of claims 5 to 7, **characterised in that** the upper segment (80, 83, 89) comprises two support rails (40, 41) each with a support surface (20, 21) disposed thereon and two movement rails (42, 43) each with a guide surface (22, 23) arranged thereon, of which the support surfaces (20, 21, 22, 23) on the one hand are each largely at right angles to the tipping moment (K) of the connecting arm (15) and on the other hand are opposite one another, wherein they symmetrically frame the threaded spindle (7) in pairs.

9. Fully automatic coffee machine according to one of claims 5 to 8, **characterised by** an embodiment of the guide surfaces (22, 23, 24, 25, 26) and/or of the support surfaces (20, 21, 22, 23) as surfaces, especially at edges of the housing (8, 88, 89).

10. Fully automatic coffee machine according to one of claims 5 to 8, **characterised by** a single-part embodiment of at least one of the segments (80, 83, 81, 84, 88, 89) with its/their guide surface(s) (22, 23, 24, 25, 26) and/or the support surface(s) (20, 21, 22, 23) and a support (72, 73) of the threaded spindle (7).

## Revendications

1. Machine à café intégralement automatique (1) comprenant une unité d'échaudage à broche (5) avec un dispositif d'échaudage (10) composé d'une chambre d'échaudage (11) et d'un piston d'échaudage (13), une broche filetée (7) afin d'actionner la chambre d'échaudage (11) via un bras de liaison (15) sous forme d'écrou de broche, dans laquelle le dispositif d'échaudage (10) est disposé latéralement à côté de la broche filetée (7), comprenant en outre un carter en forme de C (8, 88, 89) avec une section de support (82, 83, 84) le long de la broche filetée (7), une section de sol (81) ainsi qu'une section de plafond (80), respectivement disposées de manière orthogonale par rapport à la broche filetée (7), dans laquelle le carter (8, 88, 89) sert à stocker le dispositif d'échaudage (10) ainsi que la broche filetée (7) et un premier segment (81, 84, 88) et un deuxième segment (80, 83, 89) est séparable, **caractérisée en ce qu'**un plan de séparation (C) sépare le carter (8, 88, 89) en un segment inférieur (81, 84, 88) et un segment supérieur (80, 83, 89) essentiellement en diagonale par rapport à l'axe de broche (A).

2. Machine à café intégralement automatique selon la revendication 1, **caractérisée en ce que** le segment supérieur (80, 83, 89) englobe une surface d'appui (20, 21, 22, 23) qui, durant un processus d'échaudage, appuie le carter (15) de la chambre d'échaudage (11) contre un moment de renversement (K).

3. Machine à café intégralement automatique selon la revendication 2, **caractérisée en ce que** la surface d'appui (20, 21, 22, 23) s'étend parallèlement à l'axe de broche (A).

4. Machine à café intégralement automatique selon la revendication 2 ou 3, **caractérisée en ce que** le segment supérieur (80, 83, 89) englobe au moins un rail d'appui (40, 41) avec une surface d'appui (20, 21) qui lui est adjointe.

5. Machine à café intégralement automatique selon l'une des revendications précédentes, **caractérisée en ce que** le carter (8, 88, 89) développe au moins deux surfaces de guidage (22, 23, 24, 25, 26) pour guider la chambre d'échaudage (11) durant un processus le long de la broche filetée (7), lesquelles s'étendent parallèlement à l'axe de broche (A).

6. Machine à café intégralement automatique selon la revendication 4 ou 5, **caractérisée en ce que** les surfaces de guidage (22, 23) du segment supérieur (80, 83, 89) servent de surfaces d'appui.

7. Machine à café intégralement automatique selon la revendication 5 ou 6, **caractérisée en ce que** le segment inférieur (81, 84, 88) présente seulement une surface de guidage et occasionne ce faisant un basculement de la chambre d'échaudage (11).

8. Machine à café intégralement automatique selon l'une des revendications 5 à 7, **caractérisée en ce que** le segment supérieur (80, 83, 89) englobe deux rails d'appui (40, 41) avec respectivement une surface d'appui (20, 21) qui leur est adjointe et deux rails de processus (42, 43) avec respectivement une surface de guidage (22, 23) qui leur est adjointe, dont les surfaces d'appui (20, 21, 22, 23) se trouvent respectivement d'une part largement à la verticale par rapport au moment de renversement (K) du bras de liaison (15) et, d'autre part, face à face, lesquelles entourent la broche filetée (7) de manière symétrique et par paires.

9. Machine à café intégralement automatique selon l'une des revendications 5 à 8, **caractérisée par** une formation des surfaces de guidage (22, 23, 24, 25, 26) et / ou des surfaces d'appui (20, 21, 22, 23) sous forme de surfaces, en particulier sur les bords du carter (8, 88, 89).

10. Machine à café intégralement automatique selon l'une des revendications 5 à 8, **caractérisée par** une exécution en une pièce d'au moins l'un des segments (80, 83, 81, 84, 88, 89) avec la/les surface(s) de guidage (22, 23, 24, 25, 26) et / ou la / les surface(s) d'appui (20, 21, 22, 23) et un roulement (72, 73) de la broche filetée (7).
